# EUROPEAN PATENT SPECIFICATION

(11) **EP 3 001 633 B1**
(45) Date of publication and mention of the grant of the patent: **16.08.2017**
(21) Application number: 14306485.5
(22) Date of filing: 26.09.2014
(51) Int. Cl.: H04L 29/06, H04L 29/08

(54) **SERVER, CLIENT, METHOD AND COMPUTER PROGRAM PRODUCT FOR ADAPTIVE STREAMING OF MEDIA CONTENT TO A CLIENT**
SERVER, CLIENT, VERFAHREN UND COMPUTERPROGRAMM ZUM ADAPTIVEN STREAMING VON MEDIENINHALT AN EINEN CLIENT
SERVEUR, CLIENT, PROCÉDÉ ET PROGICIEL PERMETTANT UNE TRANSMISSION ADAPTATIVE EN CONTINU DE CONTENU MULTIMÉDIA À UN CLIENT

(43) Date of publication of application: 30.03.2016
(73) Proprietor: ALCATEL LUCENT, 92100 Boulogne-Billancourt (FR)
(72) Inventor: Huysegems, Rafaël, 2018 Antwerpen (BE); De Vleeschauwer, Bart, 2018 Antwerpen (BE); Verzijp, Nico, 2018 Antwerpen (BE); Van Broeck, Sigurd, 2018 Antwerpen (BE)
(74) Representative: ALU Antw Patent Attorneys

(56) References cited:
- US-A1- 2013 227 080
- FRANCK DENOUAL ET AL: "[CE-FDH] Use of HTTP2 Push feature for DASH improvement", 109. MPEG MEETING; 7-7-2014 - 11-7-2014; SAPPORO; (MOTION PICTURE EXPERT GROUP OR ISO/IEC JTC1/SC29/WG11),, no. m33665, 13 June 2014 (2014-06-13), XP030062038,
- ALI BEGEN ET AL: "Watching Video over the Web: Part 1: Streaming Protocols", IEEE INTERNET COMPUTING, IEEE SERVICE CENTER, NEW YORK, NY.- INSTITUTE OF ELECTRICAL AND ELECTRONICS ENGINEERS, US, vol. 15, no. 2, 1 March 2011 (2011-03-01), pages 54-63, XP011363531, ISSN: 1089-7801, DOI: 10.1109/MIC.2010.155

## Description

### Field of invention

The field of the invention relates to adaptive streaming of media content from a server to a client. In particular the invention relates to a server for adaptive streaming of media content to a client, a method for adaptive streaming of media content from a server to a client and a computer program product configured to perform the steps of said method. The invention is defined in independent server claim 1, the method for adaptive streaming of media content according to independent claim 11, independent streaming client claim 13, the method for receiving media content according to independent claim 14 and the computer program product according to independent claim 15.

### Background

In recent years, the demand for streaming media content, such as video and/or audio content, has rapidly increased. In particular the number of over the top (OTT) video delivery applications, such as YouTube and NetFlix, has increased. Over the top content delivery refers to delivery of content over the public internet.

In particular, HTTP adaptive streaming (HAS) is rapidly becoming the most popular method for streaming media content. One of the major advantages of HAS is its ability to adapt the video quality to the bandwidth (BW) conditions in the network, in order to avoid video rebuffering, resulting in a freeze of the playout.

Technologies for adaptive streaming over HTTP include Smooth Streaming (Microsoft), HTTP Live Streaming (Apple) and Dynamic Adaptive Streaming over HTTP (MPEG-DASH). In the context of the invention the term HAS will be used to refer to all such adaptive streaming over HTTP technologies. Furthermore, the term HAS will also used for streaming over the SPDY protocol, which is a protocol related to the HTTP protocol.

Although the introduction of HAS was a major step forward compared to the progressive download legacy method, the end user's quality of experience (QoE) can still be improved. In particular, conventional HAS implementations still suffer from occasional freezing. The document titled "Use of HTTP2 Push feature for DASH improvement", ISO/IEC JTC1/SC29/ WG11 MPEG2014/M33665, XP030062038, by Frank Denoual et al., describes improvements in adaptive streaming providing a push mode of operation.

### Summary

An object of embodiments of the invention is to improve streaming of media content from a server to a client by reducing the occurrence of freezing of the playout.

According to an embodiment of the present invention, there is provided a server for streaming media content to a client. The media content may for example be video, audio and/or text.

The media content is encoded as at least two streams having a different quality level. Each stream comprises consecutive segments. The server comprises a receiver and a transmitter. The receiver is configured to receive a request from the client for a selected segment of a first of the at least two streams. The transmitter is configured to send the selected segment of the first stream to the client, in response to the request for the selected segment of the first stream. The transmitter is further configured to push a corresponding segment of a second of the at least two streams to the client, wherein the second stream has a lower quality level than the first stream.

In other words, in addition to sending the requested quality version of the selected segment to the client the server pushes a lower quality version of the selected segment to the client.

Pushing the lower quality version of the segment in addition to the version having the requested quality establish a safety net when the pulled high quality segments would not arrive in time, thereby reducing the risk for buffer underrun and corresponding freezing of the playout.

For example, in conventional HAS implementations a buffer underrun may occur when the bandwidth suddenly drops. In a worst case scenario, the bandwidth suddenly drops during the start of the download of a new high quality segment, i.e. a segment having a relatively large data size. The client has to complete the download of the entire segment before a new lower quality segment can be requested. Meanwhile, the client will consume the segments that are stored in the client buffer. When the high quality segment is finally received, the buffer filling may already be below the threshold for switching to a lower quality level (also known as the "panic" threshold). The client will then jump to the lowest quality for the next segment. If the segment cannot be delivered in time and the client buffer is exhausted, the playout will freeze. However, in embodiments of the invention a lower quality version of the segment is made available to the client by server push, such that the client can avoid a freeze.

The second stream may for example have the lowest quality level of the at least two streams. For example, the media content may be provided as three streams of 300 Kbps, 1500 Kbps and 3 Mbps respectively. The transmitter may then push a 300 Kbps segment (lowest available quality) whenever a segment of 1500 Kbps or 3 Mbps is requested.

In an embodiment the server is configured to communicate with the client according to a web protocol supporting server push.

An advantage of using a web protocol is that use can be made of the existing infrastructure of the internet. Furthermore, the segments of the stream can be transported through firewalls without problems.

In a further embodiment, the web protocol is an HTTP protocol or SPDY protocol, preferably HTTP 2.0 or later.

An advantage of using the HTTP or SPDY protocol is that use can be made of the existing HTTP infrastructure of the internet. For example, HTTP-servers, HTTP-proxies and Content Delivery Networks (CDNs) can be reused to deliver HAS content. Furthermore, the segments of the stream can be transported through firewalls without problems.

In the context of the invention, the term HTTP also encompasses HTTPS, as technically HTTPS is HTTP on top of the SSL/TLS protocol.

Preferably, the server is configured for HTTP adaptive streaming using a HTTP based protocol supporting server push, such as HTTP 2.0 or later, or the SPDY protocol.

In an embodiment, the server may be configured to establish a persistent connection between the server and the client. For example, the connection may be a TCP connection.

In an embodiment, the transmitter is configured to push the segment of the second stream concurrently with the segment of the first stream using multiplexing.

In particular, HTTP 2.0 or later or SPDY have multiplexing capabilities. By multiplexing the transfer of the segments of the first stream and the second stream, the lower quality version of the segment is made available concurrently with the version of the requested quality. Therefore, the client has a lower quality version readily available in case the transfer of the requested quality version is unexpectedly slow, e.g. due to a sudden drop of bandwidth. Therefore, freeze of the playout may be prevented.

In an alternative embodiment, the transmitter is configured to push the lower quality segment, i.e. the segment of the second stream, before sending the requested segment, i.e. the segment of the first stream.

In an embodiment the transmitter is configured to assign a higher priority to pushing the segment of the second stream than to sending the segment of the first stream.

In particular, HTTP 2.0 or later and SPDY provide support for prioritization.

In an embodiment the transmitter is configured to push the segment of the second stream only if the quality level of the first stream exceeds a quality threshold.

In an embodiment the transmitter is configured to push the segment of the second stream only if the available bandwidth between the server and the client is below a bandwidth threshold.

In an embodiment the transmitter is configured to push the segment of the second stream only if the Round Trip Time, RTT, between client and server is above a RTT threshold.

In an embodiment the server is configured to estimate the buffer-filling of the client and the transmitter is configured to push the segment of the second stream only if the estimated buffer-filling is below a buffer threshold.

In an embodiment the server further comprises a tracker configured to track the time to deliver each requested segment to the client. The transmitter is configured to, in response to the request for the selected segment of the first stream, push the corresponding segment of the second stream only if the tracked time to deliver a segment preceding the selected segment exceeds the duration of said preceding segment.

In other words, a lower quality segment is only pushed in response to a request for a higher quality segment if for a previous request the time to deliver exceeded the duration of the previously requested segment. Therefore, the server only pushes a segment if the buffer at the client is reduced. Preferably, the transmitter is configured to push the segment of lower quality before sending the segment of the requested quality.

For example, the client may request segment *n* of VQ 3. The server tracks the time to deliver said segment. Subsequently, the client requests segment *n*+*1* of VQ > 0, e.g. VQ2 or VQ3. If the server determines that the time to deliver segment *n* exceeded the duration of segment *n* it will push segment *n*+*1* VQ0. If this condition is not fulfilled, no segment is pushed.

The server may also decide whether to push the segment of lower quality on the basis of the tracked time of a number of preceding segments and their durations.

The transmitter may be configured to only push the segment of lower quality if the time to deliver exceeded the duration with a predetermined amount, e.g. 1-10 seconds.

It is noted that the above criteria may be combined, e.g. the transmitter may be configured to only push the segment of the second stream if the RTT is above the RTT threshold and the quality level of the first stream exceeds a quality threshold.

Further embodiments of the invention relate to a method for adaptive streaming of media content from a server to a client. The media content may for example be video, audio and/or text.

In an embodiment, the media content is encoded as at least two streams having a different quality level. Each stream comprises consecutive segments. The method comprises the step of receiving with the server a request from the client for a selected segment of a first of the at least two streams. The method further comprises sending the selected segment of the first stream from the server to the client in response to said request for the selected segment of the first stream. The method further comprises pushing a corresponding segment of a second of the at least two streams from the server to the client in response to the request for the selected segment of the first stream, wherein the second stream has a lower quality level than the first stream.

In an embodiment the segment of the second stream is pushed only if the quality level of the first stream exceeds a quality threshold.

In an embodiment the segment of the second stream is pushed only if the available bandwidth between the server and the client is below a bandwidth threshold.

In an embodiment the segment of the second stream is pushed only if the Round Trip Time, RTT, between client and server is above a RTT threshold.
In an embodiment the method further comprises estimating with the server the buffer-filling of the client, wherein the segment of the second stream is pushed only if the estimated buffer-filling is below a buffer threshold.

In an embodiment the method comprises tracking the time to deliver each requested segment to the client. In this embodiment, the method further comprises pushing, in response to the request for the selected segment of the first stream, the corresponding segment of the second stream only if the tracked time to deliver a segment preceding the selected segment exceeds the duration of said preceding segment.

Whether to push the segment of lower quality may also be decided on the basis of the tracked time of a number of preceding segments and their durations.

The segment of lower quality may only be pushed if the time to deliver exceeded the duration with a predetermined amount, e.g. 1-10 seconds.

It is noted that the above criteria may be combined, e.g. the segment of the second stream may only be push if the tracked time to deliver of a previous segment exceeds the duration of said previous segment and the quality level of the first stream exceeds the quality threshold.

Further embodiments of the invention relate to an adaptive streaming client for receiving media content from a server.

In an embodiment, the media content is encoded as at least two streams having a different quality level. Each stream comprises consecutive segments. The client comprises a rate determination component, a transmitter, a receiver and a playout component. The rate determination component is configured to determine the bandwidth between the server and the client. The rate determination component is further configured to select a quality level from the different quality levels of the at least two streams on the basis of the determined bandwidth. The transmitter is configured to send a request to the server for a selected segment of a first stream, the first stream corresponding to the selected quality level. The receiver is configured to receive the selected segment of the stream of the selected quality level sent by the server in response to said request. The receiver is further configured to receive a pushed segment of a second stream of the at least two streams, wherein the second stream has a lower quality level than the first stream. The playout component is suitable for playback of segments received by the receiver. The client is configured to playback the pushed segment instead of the corresponding segment of the first stream if the bandwidth is below the previously determined bandwidth.

An advantage of the client according to embodiments of the invention may wait longer before reducing the VQ of the adaptive stream, taking more risk, because a segment of the lowest quality is locally available in case the bandwidth decreases. Therefore, the client can increase the average quality level. Furthermore, a conventional client would have to request the lower quality version of the segment from the server, whereas the client according to embodiment of the invention can immediately use the pushed segment, as this segment is already pre-loaded. This may further reduce the risk of freezing.

Embodiment of the invention further relate to a method for receiving media content from a server by an adaptive streaming client. The media content is encoded as at least two streams having a different quality level. Each stream comprises consecutive segments. The method comprises the step of determining the bandwidth between the server and the client. The method further comprises the step of selecting a quality level from the different quality levels of the at least two streams on the basis of the determined bandwidth. The method further comprises the step of sending a request to the server for a selected segment of a first stream, the first stream corresponding to the selected quality level. The method further comprises the step of receiving the selected segment of the stream of the selected quality level sent by the server in response to said request. The method further comprises the step of receiving a pushed segment of a second stream of the at least two streams, wherein the second stream has a lower quality level than the first stream. The method further comprises playing the pushed segment instead of the corresponding segment of the first stream if the bandwidth is below the previously determined bandwidth.

Further embodiments of the invention relate to a computer program product comprising non-transitory computer-executable instructions configured to, when executed, perform the steps of the method as described above.

The same effects and advantages as described above with respect to the server apply to the method and the computer program product.

### Brief description of the figures

The accompanying drawings are used to illustrate presently preferred non-limiting exemplary embodiments of the present invention. The above and other advantages of the features and objects of the invention will become more apparent and the invention will be better understood from the following detailed description when read in conjunction with the accompanying drawings, in which:
Figure 1 schematically shows a typical HAS session, wherein figure 1A shows the client in a loading state, figure 1B shows a linear streaming client in a steady state and figure 1C shows a video on demand (VoD) client in a steady state.
Figure 2 schematically shows transfer of segments having different quality levels in accordance with an embodiment of the invention.
Figure 3 schematically shows an HTTP adaptive streaming client as a browser plugin in accordance with an embodiment of the invention.
Figure 4 schematically shows an HTTP adaptive streaming client as a stand-alone application in accordance with an embodiment of the invention.
Figure 5 shows a content distribution network delivery appliance in accordance with an embodiment of the invention.
Figure 6 shows a flow diagram of a first embodiment of the method according to the invention.
Figure 7 shows a flow diagram of a second embodiment of the method according to the invention.
Figure 8 shows a flow diagram of a third embodiment of the method according to the invention.

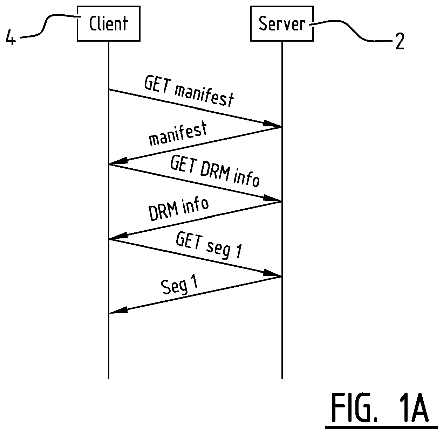

A HAS implementation (figure 1A-C) comprises a server 2 and a client 4. Figure 1A shows the client in an initialization state. The client 4 sends a request "GET manifest" to the server 4. The server responds by returning the manifest file to the client. The client reads the manifest file. The manifest file comprises metadata of the segments of the streams of the media content and may comprise further information, such as DRM data required for playing the media content. In particular, the manifest file may describe the available quality levels.

In the example shown, the manifest file indicates that DRM data is available. Therefore, the client requests DRM data by sending "GET DRM info" request to the server 2. The server 2 responds by sending the DRM data to the client 4. It is noted that requesting DRM data and sending DRM data is optional, e.g. the media content may not be protected by DRM.

Next, the client 4 switches to a loading state, wherein the client 4 starts by requesting the first segment of the stream at the desired quality level by sending a request to the server 2. The quality level may be a fixed initial quality, typical for the client, or may be a quality level that is determined on the basis of available bandwidth and/or available CPU capacity.
Distinction is made between two types of streaming: linear streaming (also known as live streaming) and Video on Demand (VoD) streaming. In the majority of linear streaming deployments, the manifest file is regularly updated to include new segments which are made available by the server. The linear streaming client will typically start a new playout by requesting a segment that is already D seconds old, in the lifecycle of the linear stream, in order to fill the buffer of the client. A VoD client will typically select the first segment of the requested VoD title. Note that for a VoD client, the manifest file will be static.

In the loading state, the client 4 will retrieve subsequent segments in a sequential way, but faster than the playout rate. With every segment download that was received faster than the playout rate, the client will grow its playout buffer. In that state a linear streaming client will steadily catch up with the linear stream.

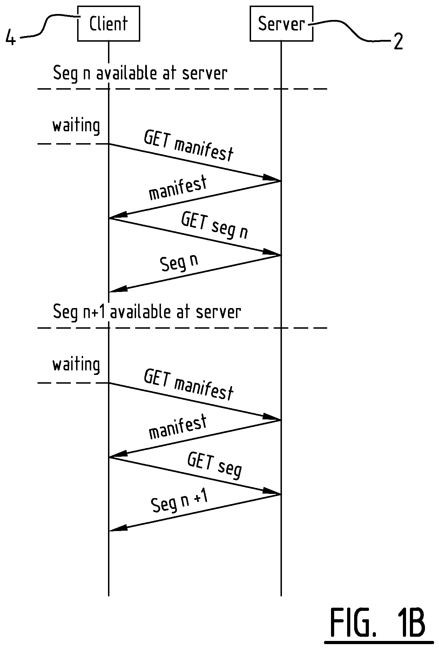

Once the buffer contains sufficient segments to ensure a continuous playout, the client 4 will go to a steady state. For a linear streaming client 4 (figure 1B) the buffer will reach a value of about D seconds when the client 4 is in the position to almost immediately retrieve the latest segment of the live stream when it becomes available at the server 2. Typically, the client 4 will periodically fetch a new manifest file. As soon as a new manifest file indicates a new segment is available for download, the linear streaming client 4 will retrieve the new segment.

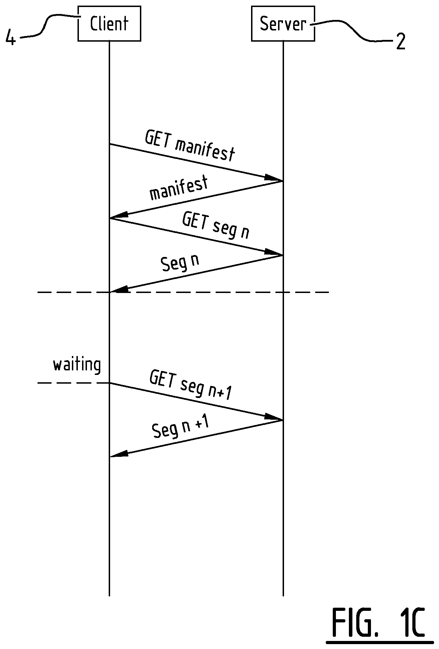

For a VoD client 4 (figure 1C), the behavior in the steady state is different. When a certain buffer-level is reached (e.g. 30 seconds), the client 4 will add additional waiting time between two segment retrievals in order not to exceed the buffer level.

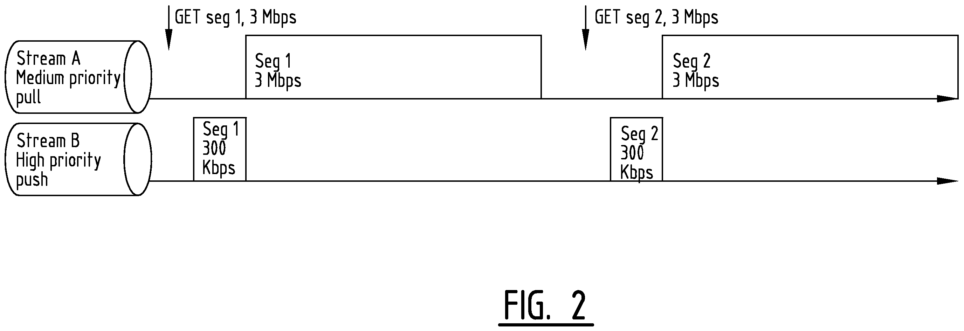

In an exemplary embodiment (figure 2), the server 2 has available high quality stream A at 3 Mbps and lowest quality stream B at 300 Kbps. When the client 4 requests a segment of the high quality stream A, the server 2 will respond by sending the requested segment of stream A. Furthermore, the server 2 will push a corresponding segment of stream B to the client 4. As shown in the figure, when segment 1 of stream A is requested, also segment 1 of stream B is pushed. When segment 2 of stream A is requested, also corresponding segment 2 of stream B is pushed. In the example shown, the segments of stream B are pushed by the server 2 at a higher priority level than the segments of stream A, ensuring that the low quality segments are made available to the client 4 as "safety net" in case e.g. the bandwidth suddenly drops. In the example shown, the server 2 employs HTTP 2.0 prioritization. Furthermore, figure 2 illustrates that the streams may be multiplexed, e.g. using HTTP multiplexing.

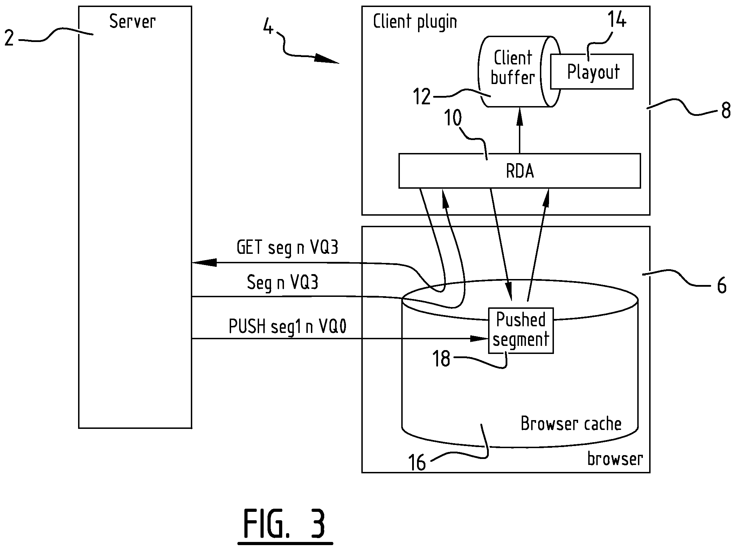

Figure 3 shows a server 2 and a client 4, wherein the client 4 comprises a browser 6 and a browser plugin 8 for HAS capabilities. The plugin 8 can only request objects via a well-defined software interface towards the browser. In some implementations, no interface may exist for notifying the plugin 8 that an object was pushed by server 2 to the browser 6. The browser 6 will just add the object to the browser cache. When the plugin 8 later request the pushed object, the browser serves the requested object immediately from the local cache.

The plugin 8 comprises a rate determination algorithm (RDA) component 10 communicating with a client buffer 12. The client buffer is operatively connected to a playout component 14. The browser 6 comprises a browser cache. In the example shown, the client 4 is streaming video content from the server 2. The video content is encoded at different bitrates, corresponding to different visual quality (VQ). In the following examples, the lowest VQ is VQ0 and the highest VQ is VQ3.

The client 4 requests a segment *n* having a visual quality VQ3 from server 2 by sending a "GET seg n VQ3" request to server 2 via the RDA component 10 and browser 6. Server 2 responds by sending the requested segment "Seg n VQ3" to the browser 6. Browser 6 delivers the segment to the RDA component 10. The server 2 also pushes a segment having quality VQ0 to the browser cache 16 in response to the request. The pushed segment 18 remains in browser cache such that it can be delivered to the plugin 8 when the RDA component 10 sends a corresponding request to the browser for said segment. Client 4 may send such a request when e.g. the bandwidth suddenly drops while downloading segment *n* at high quality VQ3. As the pushed segment 18 is already in browser cache 16, the browser can immediately return segment 18 to the RDA component 10.

In the embodiment shown, the browser 6 implementation does not allow an object to be pushed directly to the plugin 8 from the server 2. However, the invention is not limited to such implementations. The skilled person will appreciate that the limitations of the plug-in interfaces of browsers, such as the NPAPI interface, may not be present in all current and future browsers. For example, browsers may comprise native support for HAS, obviating the need for a HAS plugin 8.

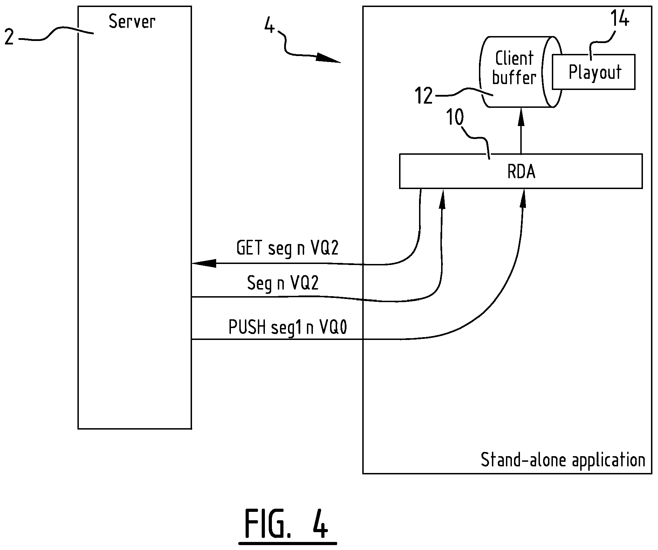

Figure 4 shows a server 2 and a client 4 wherein the client 4 is implemented as an integrated stand-alone application. Therefore, in contrast to the embodiment of figure 3, the RDA component 10 can be informed directly when an object is pushed by the server 2. In this example, the client 4 requests segment *n* of video quality VQ2, upon which the server 2 returns the requested segment and also pushes the lower quality segment *n* of VQ0 to the client.

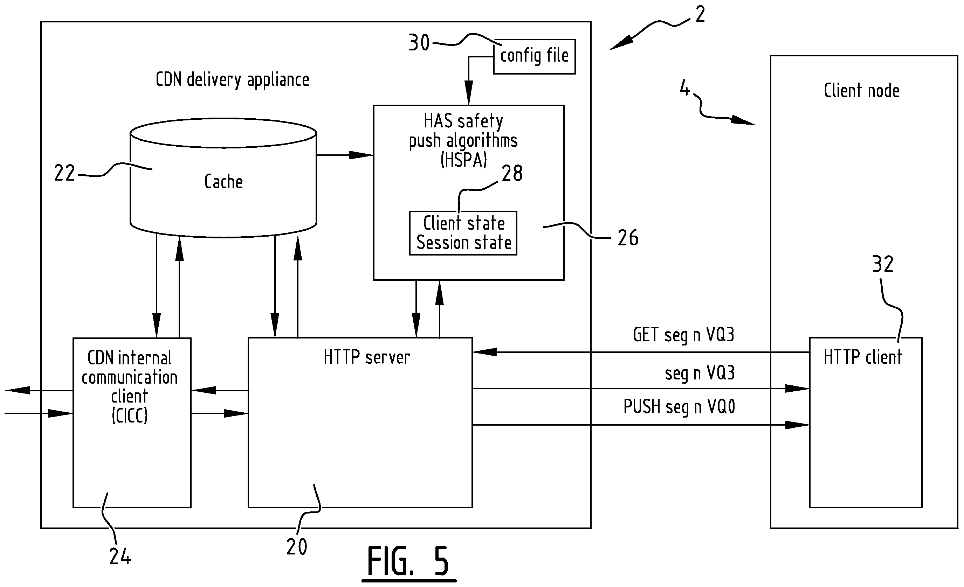

Figure 5 shows an embodiment of a content distribution network (CDN) delivery appliance 2. The CDN delivery appliance 2 comprises a HTTP server 20 which is in communication with a cache 22. HTTP server 20 is also in communication with a CDN internal communication client (CICC) 24. The CICC 24 communicates with cache 22. The HTTP server 20 is also in communication with a HAS safety push algorithm component (HSPA) which optionally comprises a memory component 28 for storing the client state and/or session state, for input for its algorithms. The CDN delivery appliance may further comprises a configuration file 30 which is accessible by the HSPA. The HSPA component 26 is further in communication with the cache 22. The client node 4 comprises an HTTP client 32. The HTTP server component 20 takes care of the HTTP communication with the client. The HTTP server 20 receives GET requests from the client. The HTTP server 20 performs a check to verify if the requested object, e.g. a segment, is already present in the cache 22. If present, it will provide the object to the client 4. If not present, it will inform the CDN internal communication client 24 to fetch the object from an upstream CDN node. In case the object was not found in cache 22, the CICC fetches the object from an upstream CDN node. When the CICC obtains the requested object completely or partially, it informs the HTTP server 20. The HTTP server will then take care of the transfer to the client 4 via HTTP client 32.

Each time when an HTTP request or a response is received by the HTTP server, a functional block called HAS safety push algorithms (HSPA) will be informed. HSPA component 26 will disregard all requests/responses that are not HAS related. If the request / response is HAS related, it will use one or more algorithms to decide if and what additional objects must be pushed to the requesting client. In this particular example, the HSPA component 26 determines if the lowest VQ segment must be pushed to the requesting client. It instructs the HTTP server 20 to deliver the additional segment via server push.

The HSPA 26 may follow different strategies to decide when to push a lower quality segment. It may continuously push lower quality segments, e.g. always push the lowest quality segment if a higher quality segment is request. It may alternatively only push a lower quality segment, e.g. the lowest quality segment, when the requested quality is above a certain threshold.

Furthermore, the HSPA 26 may only push lower quality segments when certain conditions are fulfilled, i.e. when there is a certain risk of freeze at the client. For example:
- The available bandwidth between the node and the client drops below a certain bandwidth threshold.
- The RTT between client and server exceeds a certain RTT threshold.
- The estimated buffer-filling of the client drops below a certain buffer threshold. The server uses "HAS session reconstruction" techniques to get an estimate of the buffer-filling at the client.
- The transfer time of a preceding segment or a group of preceding segments is higher than the corresponding playout duration of these at least one preceding segments. This means that the client-buffer is shrinking.
- The server may use a mix of the above criteria to make its decision.

In an embodiment of the method of the invention, the server receives a request for segment n at quality level VQ3 at step S100. The server responds by sending segment *n* at VQ3 at step S102 and pushing segment *n* at VQ0 at step S104. Alternatively, steps S102 and S104 may be performed in reversed order or concurrently by using multiplexing.

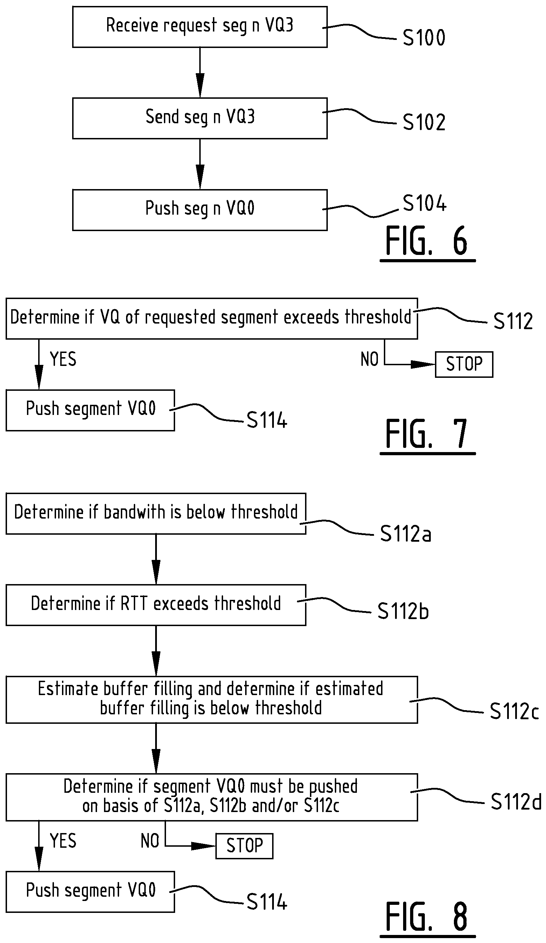

In an embodiment, the server determines if the quality, e.g. video quality, of a requested segment exceeds a quality threshold in step S112 (figure 7). If not, no additional segments are pushed by the server. If the requested quality exceeds the threshold, the server also pushes a corresponding segment of the lowest quality, e.g. VQ0 in step S114.

In an embodiment, the server determines if the bandwidth between the server and the client is below a bandwidth threshold in step S112a (figure 8). In step S112b the server determines if the RTT exceeds a RTT threshold. In step S112c the server estimates a buffer filling at the client and determines if the estimated buffer filling is below a buffer threshold. In step S112d the server determines if a segment must be pushed on the basis of the results of steps S112a, S112b and/or S112c. It is noted that the server may employ any combination of steps S112a, S112b and S112c. For example, the server may only perform steps S112a and S112b and determine whether to push segment VQ0 on the basis of the results of these two steps. If the server determines that a segment is to be pushed, in the last step S114 the server will push the segment at video quality VQ0.

A person skilled in the art would readily recognize that steps of various above-described methods can be performed by programmed computers and/or electronic devices with computation capabilities. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers and/or electronic devices with computation capabilities (where hard coded or soft coded) programmed to perform said steps of the above-described methods. The functions of the various elements shown in the figures, including any functional blocks may be provided through the use of dedicated hardware as well as hardware capable of executing software in association with appropriate software. Hardware and may include, without limitation, digital signal processor (DSP) hardware, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic.

It should be appreciated by those skilled in the art that any block diagrams herein represent conceptual views of illustrative circuitry embodying the principles of the invention. Similarly, it will be appreciated that any flow charts, flow diagrams, represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. Server (2) for adaptive streaming of media content to a client (4), wherein the media content is encoded as at least two streams having a different quality level, each stream comprising consecutive segments, the server (2) comprising:
- a receiver configured to receive a request from the client for a selected segment of a first stream of the at least two streams; and
- a transmitter configured to, in response to the request for the selected segment of the first stream:
∘ send the selected segment of the first stream to the client; and the transmitter further **characterized by** being configured to
∘ push a corresponding segment of a second stream of the at least two streams to the client, wherein the second stream has a lower quality level than the first stream.

2. Server (2) according to claim 1, the server (2) being configured to communicate with the client (4) according to a web protocol supporting server push.

3. Server (2) according to claim 2, wherein the web protocol is an HTTP protocol or SPDY protocol, preferably HTTP 2.0 or later.

4. Server (2) according to any preceding claim, wherein the transmitter is configured to push the segment of the second stream concurrently with the segment of the first stream using multiplexing.

5. Server (2) according to any preceding claim, wherein the transmitter is configured to assigns a higher priority to pushing the segment of the second stream than to sending the segment of the first stream.

6. Server (2) according to any preceding claim, wherein the transmitter is configured to push the segment of the second stream only if the quality level of the first stream exceeds a quality threshold.

7. Server (2) according to any preceding claim, wherein the transmitter is configured to push the segment of the second stream only if the available bandwidth between the server (2) and the client (4) is below a bandwidth threshold.

8. Server (2) according to any preceding claim, wherein the transmitter is configured to push the segment of the second stream only if the Round Trip Time, RTT, between client (4) and server (2) is above a RTT threshold.

9. Server (2) according to any preceding claim, wherein the server (2) is configured to estimate the buffer-filling of the client (4) and the transmitter is configured to push the segment of the second stream only if the estimated buffer-filling is below a buffer threshold.

10. Server (2) according to any preceding claim, further comprising a tracker configured to track the time to deliver each requested segment to the client (4), wherein the transmitter is configured to, in response to the request for the selected segment of the first stream, push the corresponding segment of the second stream only if the tracked time to deliver a segment preceding the selected segment exceeds the duration of said preceding segment.

11. Method for adaptive streaming of media content from a server (2) to a client (4), wherein the media content is encoded as at least two streams having a different quality level, each stream comprising consecutive segments, the method comprising the steps of:
- receiving at the server (2) a request from the client (4) for a selected segment of a first stream of the at least two streams;
- sending the selected segment of the first stream from the server (2) to the client (4) in response to the request for the selected segment of the first stream:
the method further **characterized by**:
- pushing a corresponding segment of a second stream of the at least two streams from the server (2) to the client (4) in response to the request for the selected segment of the first stream, wherein the second stream has a lower quality level than the first stream.

12. Method according to claim 11, comprising communicating with the client (4) according to a web protocol supporting server push, wherein the web protocol is an HTTP protocol or SPDY protocol, preferably HTTP 2.0 or later.

13. Adaptive streaming client (4) for receiving media content from a server (2), wherein the media content is encoded as at least two streams having a different quality level, each stream comprising consecutive segments, the client (4) comprising:
- a rate determination component configured to determine the bandwidth between the server (2) and the client (4) and to select a quality level from the different quality levels of the at least two streams on the basis of the determined bandwidth;
- a transmitter configured to send a request to the server (2) for a selected segment of a first stream, the first stream corresponding to the selected quality level;
- a receiver configured to receive the selected segment of the stream of the selected quality level sent by the server (2) in response to said request, and to receive a pushed segment of a second stream of the at least two streams, wherein the second stream has a lower quality level than the first stream; and
- a playout component for playback of segments received by the receiver,
wherein the client (4) is configured to playback the pushed segment instead of the corresponding segment of the first stream if the bandwidth is below the previously determined bandwidth.

14. Method for receiving media content from a server (2) by an adaptive streaming client (4), wherein the media content is encoded as at least two streams having a different quality level, each stream comprising consecutive segments, the method comprising:
- determining the bandwidth between the server (2) and the client (4);
- selecting a quality level from the different quality levels of the at least two streams on the basis of the determined bandwidth;
- sending a request to the server (2) for a selected segment of a first stream, the first stream corresponding to the selected quality level;
- receiving the selected segment of the stream of the selected quality level sent by the server (2) in response to said request; the method further **characterized by**:
- receiving a pushed segment of a second stream of the at least two streams, wherein the second stream has a lower quality level than the first stream; and
- playing the pushed segment instead of the corresponding segment of the first stream if the bandwidth is below the previously determined bandwidth.

15. A computer program product comprising non-transitory computer-executable instructions configured to, when executed, perform the steps of the method of any of the claims 11, 12 or 14.

## Patentansprüche

1. Server (2) zum adaptiven Streaming von Medieninhalt an einen Client (4), wobei der Medieninhalt als mindestens zwei Streams mit einer unterschiedlichen Qualitätsstufe codiert ist, wobei jeder Stream aufeinanderfolgende Segmente umfasst, wobei der Server (2) Folgendes umfasst:
- einen Empfänger, der ausgelegt ist zum Empfangen einer Anfrage von dem Client für ein ausgewähltes Segment eines ersten Streams der mindestens zwei Streams; und
- einen Sender, der ausgelegt ist, um in Antwort auf die Anfrage für das ausgewählte Segment des ersten Streams:
∘ das ausgewählte Segment des ersten Streams an den Client zu senden; und
wobei der Sender weiterhin **dadurch gekennzeichnet ist, dass** er ausgelegt ist, um
∘ ein entsprechendes Segment eines zweiten Streams der mindestens zwei Streams an den Client zu pushen, wobei der zweite Stream eine niedrigere Qualitätsstufe hat als der erste Stream.

2. Server (2) nach Anspruch 1, wobei der Server (2) ausgelegt ist, um mit dem Client (4) gemäß einem Webprotokoll, das Server-Push unterstützt, zu kommunizieren.

3. Server (2) nach Anspruch 2, wobei das Webprotokoll ein HTTP-Protokoll oder SPDY-Protokoll ist, vorzugsweise HTTP 2.0 oder höher.

4. Server (2) nach einem beliebigen vorstehenden Anspruch, wobei der Sender ausgelegt ist, um das Segment des zweiten Streams zeitgleich mit dem Segment des ersten Streams mittels Multiplexing zu pushen.

5. Server (2) nach einem beliebigen vorstehenden Anspruch, wobei der Sender ausgelegt ist, um dem Pushen des Segments des zweiten Streams eine höhere Priorität zuzuweisen als dem Senden des Segments des ersten Streams.

6. Server (2) nach einem beliebigen vorstehenden Anspruch, wobei der Sender ausgelegt ist, um das Segment des zweiten Streams nur zu pushen, wenn die Qualitätsstufe des ersten Streams eine Qualitätsgrenze überschreitet.

7. Server (2) nach einem beliebigen vorstehenden Anspruch, wobei der Sender ausgelegt ist, um das Segment des zweiten Streams nur zu pushen, wenn die verfügbare Bandbreite zwischen dem Server (2) und dem Client (4) unterhalb einer Bandbreitengrenze liegt.

8. Server (2) nach einem beliebigen vorstehenden Anspruch, wobei der Sender ausgelegt ist, um das Segment des zweiten Streams nur zu pushen, wenn die Umlaufzeit, RTT, zwischen Client (4) und Server (2) über einer RTT-Grenze liegt.

9. Server (2) nach einem beliebigen vorstehenden Anspruch, wobei der Server (2) zum Schätzen der Pufferfüllung des Clients (4) ausgelegt ist, und der Sender ausgelegt ist, um das Segment des zweiten Streams nur zu pushen, wenn die geschätzte Pufferfüllung unterhalb einer Puffergrenze liegt.

10. Server (2) nach einem beliebigen vorstehenden Anspruch, weiterhin umfassend einen Tracker, der zum Aufzeichnen der Zeit für die Lieferung jedes angefragten Segments an den Client (4) ausgelegt ist, wobei der Sender ausgelegt ist, um in Antwort auf die Anfrage für das ausgewählte Segment des ersten Streams das entsprechende Segment des zweiten Streams nur zu pushen, wenn die aufgezeichnete Zeit für die Lieferung eines Segments, das dem ausgewählten Segment vorhergeht, die Dauer des besagten vorhergehenden Segments überschreitet.

11. Verfahren zum adaptiven Streaming von Medieninhalt von einem Server (2) an einen Client (4), wobei der Medieninhalt als mindestens zwei Streams mit einer unterschiedlichen Qualitätsstufe codiert ist, wobei jeder Stream aufeinanderfolgende Segmente umfasst, wobei das Verfahren folgende Schritte umfasst:
- Empfangen, an dem Server (2), einer Anfrage von dem Client (4) für ein ausgewähltes Segment eines ersten Streams der mindestens zwei Streams;
- Senden des ausgewählten Segments des ersten Streams von dem Server (2) an den Client (4) in Antwort auf die Anfrage für das ausgewählte Segment des ersten Streams;
wobei das Verfahren weiterhin **gekennzeichnet ist durch**:
- Pushen eines entsprechenden Segments eines zweiten Streams der mindestens zwei Streams von dem Server (2) an den Client (4) in Antwort auf die Anfrage für das ausgewählte Segment des ersten Streams,
wobei der zweite Stream eine niedrigere Qualitätsstufe hat als der erste Stream.

12. Verfahren nach Anspruch 11, umfassend das Kommunizieren mit dem Client (4) gemäß einem Webprotokoll, das Server-Push unterstützt, wobei das Webprotokoll ein HTTP-Protokoll oder SPDY-Protokoll ist, vorzugsweise HTTP 2.0 oder höher.

13. Adaptiver Streaming-Client (4) zum Empfangen von Medieninhalt von einem Server (2), wobei der Medieninhalt als mindestens zwei Streams mit einer unterschiedlichen Qualitätsstufe codiert ist, wobei jeder Stream aufeinanderfolgende Segmente umfasst, wobei der Client (4) Folgendes umfasst:
- eine Ratenbestimmungskomponente, die ausgelegt ist, um die Bandbreite zwischen dem Server (2) und dem Client (4) zu bestimmen und um eine Qualitätsstufe aus den unterschiedlichen Qualitätsstufen der mindestens zwei Streams auf Basis der bestimmten Bandbreite auszuwählen;
- einen Sender, der ausgelegt ist zum Senden einer Anfrage für ein ausgewähltes Segment eines ersten Streams an den Server (2), wobei der erste Stream der ausgewählten Qualitätsstufe entspricht;
- einen Empfänger, der ausgelegt ist zum Empfangen des ausgewählten Segments des Streams der ausgewählten Qualitätsstufe, das von dem Server (2) in Antwort auf die besagte Anfrage gesendet wird, und zum Empfangen eines gepushten Segments eines zweiten Streams der mindestens zwei Streams, wobei der zweite Stream eine niedrigere Qualitätsstufe hat als der erste Stream; und
- eine Playout-Komponente für die Wiedergabe von Segmenten, die von dem Empfänger empfangen werden,
wobei der Client (4) ausgelegt ist für die Wiedergabe des gepushten Segments anstelle des entsprechenden Segments des ersten Streams, wenn die Bandbreite unterhalb der zuvor bestimmten Bandbreite liegt.

14. Verfahren zum Empfangen von Medieninhalt von einem Server (2) durch einen adaptiven Streaming-Client (4), wobei der Medieninhalt als mindestens zwei Streams mit einer unterschiedlichen Qualitätsstufe codiert ist, wobei jeder Stream aufeinanderfolgende Segmente umfasst, wobei das Verfahren Folgendes umfasst:
- Bestimmen der Bandbreite zwischen dem Server (2) und dem Client (4);
- Auswählen einer Qualitätsstufe aus den unterschiedlichen Qualitätsstufen der mindestens zwei Streams auf Basis der bestimmten Bandbreite;
- Senden einer Anfrage für ein ausgewähltes Segment eines ersten Streams an den Server (2), wobei der erste Stream der ausgewählten Qualitätsstufe entspricht;
- Empfangen des ausgewählten Segments des Streams der ausgewählten Qualitätsstufe, das von dem Server (2) in Antwort auf die besagte Anfrage gesendet wird;
wobei das Verfahren weiterhin **gekennzeichnet ist durch**:
- Empfangen eines gepushten Segments eines zweiten Streams der mindestens zwei Streams, wobei der zweite Stream eine niedrigere Qualitätsstufe hat als der erste Stream; und
- Abspielen des gepushten Segments anstelle des entsprechenden Segments des ersten Streams, wenn die Bandbreite unterhalb der zuvor bestimmten Bandbreite liegt.

15. Computerprogrammprodukt, umfassend nicht-vorübergehende, computerlesbare Anweisungen, die bei Ausführung ausgelegt sind, um die Schritte des Verfahrens nach einem beliebigen der Ansprüche 11, 12 oder 14 auszuführen.

## Revendications

1. Serveur (2) de diffusion en continu adaptative de contenu multimédia à destination d'un client (4), dans lequel le contenu multimédia est codé comme au moins deux flux ayant un niveau de qualité différent, chaque flux comprenant des segments consécutifs, le serveur (2) comprenant :
- un récepteur configuré pour recevoir une demande provenant du client d'un segment sélectionné d'un premier flux parmi les au moins deux flux ; et
- un émetteur configuré pour, en réponse à la demande du segment sélectionné du premier flux :
∘ envoyer le segment sélectionné du premier flux au client ; et
l'émetteur étant en outre **caractérisé en ce qu'**il est configuré pour
∘ pousser un segment correspondant d'un deuxième flux parmi les au moins deux flux vers le client, dans lequel le deuxième flux a un niveau de qualité inférieur à celui du premier flux.

2. Serveur (2) selon la revendication 1, le serveur (2) étant configuré pour communiquer avec le client (4) conformément à un protocole Internet prenant en charge la technique Server Push.

3. Serveur (2) selon la revendication 2, dans lequel le protocole Internet est un protocole HTTP ou un protocole SPDY, de préférence HTTP 2.0 ou ultérieur.

4. Serveur (2) selon l'une quelconque des revendications précédentes, dans lequel l'émetteur est configuré pour pousser le segment du deuxième flux simultanément avec le segment du premier flux en utilisant le multiplexage.

5. Serveur (2) selon l'une quelconque des revendications précédentes, dans lequel l'émetteur est configuré pour attribuer une priorité supérieure pour pousser le segment du deuxième flux que pour envoyer le segment du premier flux.

6. Serveur (2) selon l'une quelconque des revendications précédentes, dans lequel l'émetteur est configuré pour pousser le segment du deuxième flux seulement si le niveau de qualité du premier flux dépasse un seuil de qualité.

7. Serveur (2) selon l'une quelconque des revendications précédentes, dans lequel l'émetteur est configuré pour pousser le segment du deuxième flux seulement si la bande passante disponible entre le serveur (2) et le client (4) est inférieure à un seuil de bande passante.

8. Serveur (2) selon l'une quelconque des revendications précédentes, dans lequel l'émetteur est configuré pour pousser le segment du deuxième flux seulement si le temps de propagation aller-retour, RTT, entre le client (4) et le serveur (2) est supérieur à un seuil de RTT.

9. Serveur (2) selon l'une quelconque des revendications précédentes, le serveur (2) étant configuré pour estimer le remplissage de la mémoire tampon du client (4) et l'émetteur étant configuré pour pousser le segment du deuxième flux seulement si le remplissage de la mémoire tampon estimé est inférieur à un seuil de mémoire tampon.

10. Serveur (2) selon l'une quelconque des revendications précédentes, comprenant en outre un dispositif de suivi configuré pour le suivi du temps de distribution de chaque segment demandé au client (4), dans lequel l'émetteur est configuré, en réponse à la demande du segment sélectionné du premier flux, pour pousser le segment correspondant du deuxième flux seulement si le temps suivi pour distribuer un segment précédant le segment sélectionné dépasse la durée dudit segment précédant.

11. Procédé de diffusion en continu adaptative de contenu multimédia à partir d'un serveur (2) vers un client (4), dans lequel le contenu multimédia est codé comme au moins deux flux ayant un niveau de qualité différent, chaque flux comprenant des segments consécutifs, le procédé comprenant les étapes suivantes
- recevoir au niveau du serveur (2) une demande du client (4) d'un segment sélectionné d'un premier flux parmi les au moins deux flux ;
- envoyer le segment sélectionné du premier flux à partir du serveur (2) vers le client (4) en réponse à la demande du segment sélectionné du premier flux :
le procédé étant en outre **caractérisé par** l'étape suivante :
- pousser un segment correspondant d'un deuxième flux parmi les aux moins deux flux à partir du serveur (2) vers le client (4) en réponse à la demande du segment sélectionné du premier flux,
dans lequel le deuxième flux a un niveau de qualité inférieur à celui du premier flux.

12. Procédé selon la revendication 11, comprenant la communication avec le client (4) conformément à un protocole Internet prenant en charge la technique Server Push, dans lequel le protocole Internet est un protocole HTTP ou un protocole SPDY, de préférence HTTP 2.0 ou ultérieur.

13. Client de diffusion en continu adaptative (4) pour recevoir un contenu multimédia à partir d'un serveur (2), dans lequel le contenu multimédia est codé comme au moins deux flux ayant un niveau de qualité différent, chaque flux comprenant des segments consécutifs, le client (4) comprenant :
- un composant de détermination de débit configurée pour déterminer la bande passante entre le serveur (2) et le client (4) et pour sélectionner un niveau de qualité à partir des différents niveaux de qualité des au moins deux flux sur la base de la bande passante déterminée ;
- un émetteur configuré pour envoyer une demande au serveur (2) d'un segment sélectionné d'un premier flux, le premier flux correspondant au niveau de qualité sélectionné ;
- un récepteur configuré pour recevoir le segment sélectionné du flux du niveau de qualité sélectionné envoyé par le serveur (2) en réponse à ladite demande, et pour recevoir un segment poussé d'un deuxième flux parmi les au moins deux flux, dans lequel le deuxième flux à un niveau de qualité inférieur à celui du premier flux ; et
- un composant d'affichage pour la lecture de segments reçus par le récepteur, le client (4) étant configuré pour lire le segment poussé au lieu du segment correspondant du premier flux si la bande passante est inférieure à la bande passante précédemment déterminée.

14. Procédé de réception d'un contenu multimédia à partir d'un serveur (2) par un client de diffusion en continu adaptative (4), dans lequel le contenu multimédia est codé comme au moins deux flux ayant un niveau de qualité différent, chaque flux comprenant des segments consécutifs, le procédé comprenant les étapes suivantes :
- déterminer la bande passante entre le serveur (2) et le client (4)
- sélectionner un niveau de qualité à partir des différents niveaux de qualité des au moins deux flux sur la base de la bande passante déterminée ;
- envoyer une demande au serveur (2) d'un segment sélectionné d'un premier flux, le premier flux correspondant au niveau de qualité sélectionné ;
- recevoir le segment sélectionné du flux du niveau de qualité sélectionné envoyé par le serveur (2) en réponse à ladite demande ;
le procédé étant en outre **caractérisé par** les étapes suivantes :
- recevoir un segment poussé d'un deuxième flux parmi les au moins deux flux, dans lequel le deuxième flux a un niveau de qualité inférieur à celui du premier flux ; et
- lire le segment poussé au lieu du segment correspondant du premier flux si la bande passante est inférieure à la bande passante déterminée précédemment.

15. Produit de programme informatique comprenant des instructions non transitoires exécutables par ordinateur configurées pour, lorsqu'elles sont exécutées, effectuer les étapes du procédé selon l'une quelconque des revendications 11, 12 et 14.
